(19) **Europäisches Patentamt**
**European Patent Office**
**Office européen des brevets**

(11) **EP 4 170 567 B1**

(12) **EUROPEAN PATENT SPECIFICATION**

(45) Date of publication and mention
of the grant of the patent:
**01.07.2026 Bulletin 2026/27**

(21) Application number: **21825073.6**

(22) Date of filing: **28.05.2021**

(51) International Patent Classification (IPC):
*G06Q 10/06* (2023.01)   *G06Q 50/26* (2024.01)
*G06Q 30/06* (2023.01)   *G06Q 10/0637* (2023.01)
*G06Q 40/06* (2012.01)   *G06Q 50/06* (2024.01)

(52) Cooperative Patent Classification (CPC):
**G06Q 10/0631; G06Q 10/06; G06Q 10/0637;**
**G06Q 10/06375; G06Q 30/06; G06Q 40/04;**
**G06Q 40/06; G06Q 50/06; G06Q 50/26;**
G06Q 40/00; Y02P 90/84; Y02P 90/90

(86) International application number:
**PCT/KR2021/006682**

(87) International publication number:
**WO 2021/256727 (23.12.2021 Gazette 2021/51)**

(54) **SYSTEM AND METHOD FOR CARBON EVALUATION**

SYSTEM UND VERFAHREN ZUR KOHLENSTOFFBEURTEILUNG

SYSTÈME ET PROCÉDÉ D'ÉVALUATION DE CARBONE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.06.2020 KR 20200074460**
**05.01.2021 KR 20210000603**

(43) Date of publication of application:
**26.04.2023 Bulletin 2023/17**

(73) Proprietor: **Korea Technology Finance**
**Corporation (KOTEC)**
**Busan 48400 (KR)**

(72) Inventors:
• **YOU, Wang Hee**
**Seoul 08331 (KR)**
• **LEE, Ji Min**
**Seoul 08750 (KR)**
• **LIM, Sun Hyung**
**Bucheon-si, Gyeonggi-do 14587 (KR)**
• **PARK, Ha Young**
**Busan 48091 (KR)**
• **KIM, Eun Ju**
**Yongin-si, Gyeonggi-do 17108 (KR)**

(74) Representative: **Gulde & Partner**
**Patent- und Rechtsanwaltskanzlei mbB**
**Berliner Freiheit 2**
**10785 Berlin (DE)**

(56) References cited:
JP-A- 2007 164 624    JP-A- 2010 092 290
JP-A- 2010 092 290    JP-B2- 4 620 858
KR-A- 20120 095 593    KR-B1- 101 457 890
KR-B1- 101 457 890    US-A1- 2019 005 578

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Field of Invention]

The present relates to a carbon valuation system and method for assessment of a value of greenhouse gas reduction presumed to be induced by a technology project.

[Background of Invention]

The current climate change is one of the most important problems that mankind must deal with worldwide. Accordingly, after the Paris Agreement went into effect in 2016, 121 countries joined the Climate Goal Upward Alliance after the Climate Summit in September 2019. Starting with adoption of 2050 carbon neutrality as a global agenda, the European Union firstly announced declaration of 2050 carbon neutrality in December 2019, and then, other major countries such as China, Japan and Korea also declared carbon neutrality one after another.

In order to actively respond to climate change, global regulations will be strengthened and companies will change their business activities accordingly, whereby the global economic order will be changed.

The European Union and the United States have begun discussing the introduction of a carbon border tax in earnest, and the European Union has raised automobile emission regulations and is strengthening environmental regulations such as establishment of a new plastic tax. The carbon border tax is a system that imposes a tax when exporting goods from countries with weak greenhouse gas emission regulations to countries with strong regulations.

Further, major international organizations such as the International Monetary Fund (IMF) and the Bank for International Settlements (BIS) are also recommending a preemptive response, such as raising carbon taxes and establishing a climate change risk financial supervision and management system.

In the private sector, global companies' and financial companies' participation in RE100 and ESG (environmental-social-governance) investment are expanding, and environment-considering management activities such as limiting investment in environmentally unfriendly companies are spreading. RE100 is a voluntary campaign that 100% of the company's electricity will be supplied with renewable energy and, in recent years, about 260 companies have declared their participation. On the other hand, ESG is to evaluate non-financial factors such as contribution of a company on environment and society, transparency of management structure, etc. Currently, as a result of the GSIA survey, the global ESG-related investment scale increased from $18 trillion in 2014 to $23 trillion in 2016, and even to $30 trillion in 2018.

Meanwhile, the eco-friendly market is also growing, and major countries are expanding their investments to preoccupy new eco-friendly markets.

Renewable energy industries such as solar and wind power are gradually developing, the value of hydrogen is being highlighted, and the secondary battery market is also expected to grow rapidly due to the expandable distribution of electric vehicles.

Before and after the declaration of carbon neutrality, major countries announced large-scale green investments. The European Union agreed to invest 1 trillion euros over the next 10 years in the Green Deal, while US President-elect Biden agreed to invest 1.7 trillion dollars over the next 10 years.

Korea declared carbon neutrality in October 2019, and greenhouse gas emission is expected to decrease after the peak of 7277.6 million tons in 2018. However, the period remaining until carbon neutrality is only 32 years, which are relatively tighter than other countries (the European Union (60 years) and Japan (37 years)).

In the industrial structure, a proportion of the manufacturing industry and a high proportion of industries such as steel and petrochemicals that emit large amounts of carbon are also a limiting factor in achieving carbon neutrality early. Further, in an energy mix aspect, the importance of coal generation (40.4%) is higher than that of other countries (USA (24.0%), Japan (32.0%), Germany (30.0%)).

Under such circumstances, if the industrial structure changes from high-carbon to low-carbon and renewable energy expands, the burden on the industry increases while competitiveness may weaken, simultaneously. Further, reduction in jobs due to weakening of existing industrial foundation such as thermal power generation, internal combustion engine, etc., and inflation such as raised public utilities including electric charges, heating costs, etc. are also a concern.

Considering the peculiarities of the economic and industrial structure of Korea, which is highly dependent on trade, changes are inevitable to respond to a new international order. This is because, in the case of a lukewarm response to carbon neutrality, investment in key industries and global sourcing opportunities are limited, which negatively affects exports, overseas financing, and corporate credit ratings, or the like. In particular, if the European Union or the United States introduce a carbon border tax, it is inevitable that major domestic industries such as petrochemicals and steel will suffer a significant blow.

In this trend, as a solution of promoting carbon neutrality and strengthening the institutional basis, a system and method for assessment or evaluation of carbon value would be required.

In this regard, the carbon value is an amount of greenhouse gas reduction estimated to be caused by the technology project, which is converted into a value amount. In the present invention, a method for assessment or evaluation of carbon value is proposed.

The conventional devices are disclosed in JP 2010 092290 A, KR 101 457 890 B1, and KR 2012 0095593 A

[Summary of Invention]

[Technical Problem to be Solved]

An object of the present invention is to provide a carbon value assessment system and method that can evaluate and calculate an amount of greenhouse gas reduction estimated to be induced by a technology project as a value amount, so as to be utilized for finance or the like.

[Technical Solution]

In order to solve the above problems, a carbon value assessment system is provided as defined in claim 1.

According to an embodiment, the technology project refers to a business in which a subject of this business executes a GHG reduction project, otherwise, develops, produces, sells or services a GHG reduction product, wherein the GHG reduction project includes an activity for the subject of the technology project to directly generate GHG reduction effects, while the GHG reduction product includes a product or service to be provided for execution of the GHG reduction project so as to indirectly contribute to the GHG reduction. In this regard, an amount of GHG reduction by the GHG reduction product may be a reduction amount estimated while reflecting a contribution extent of the product to the GHG reduction amount by the GHG reduction project.

According to an embodiment, the information processing device evaluates a value of the GHG reduction amount according to the following equation,

[Equation]

$$\text{Carbon value} = \sum_{t=1}^{n} \frac{\text{estimated GHG reduction amount}_t \times \text{emission permit price}}{(1+r)^t}$$

wherein n is a GHG reduction calculation period, the estimated GHG reduction amount$_t$ is an estimated amount of GHG in t-th year, and r denotes the discount rate.

According to an embodiment, the information processing device may evaluate a value of the GHG reduction amount according to the following equation, additionally based on a technical contribution extent indicating contribution of key technology constituting the technology project to the GHG reduction.

[Equation]

$$\text{Carbon value} = \sum_{i=1}^{n} \frac{\text{estimated GHG reduction amount}_t \times \text{emission permit price}}{(1+r)^t} \times \text{technical}$$

contribution extent

Wherein n may be an economic lifespan of the technology constituting the technology project, while r may be the discount rate.

According to an embodiment, the activity amount may be calculated from product sales (or sales amount), a production volume, a waste incineration amount or a product use amount by the subject of the technology project, wherein a change over time may be reflected.

According to an embodiment, the emission permit price is a value received from an external emission permit trading server, which may be a price estimated on the basis of an evaluation reference date, an average price for a predetermined period, or a price for the predetermined period.

According to an embodiment, the emission permit price may be an average value of emission permit prices actually traded for 1 year from a start date to an end date of the previous year prior to a year, in which the evaluation reference date belongs, with weighting a trading volume.

Further, a carbon value assessment method is provided as defined in claim 8.

[Effect of Invention]

The carbon valuation system and method according to the present invention may estimate and calculate an expected amount of GHG reduction presumed to be induced in a technology project as a value amount, thereby being effectively utilized for finance, or the like.

[Brief Description of Drawings]

FIG. 1 is a step-by-step illustration of a process for evaluating a carbon value according to an embodiment of the present invention.

FIG. 2 is a diagram schematically illustrating an estimated GHG reduction amount, which is one of factors considered when evaluating the carbon value according to an embodiment of the present invention.

[Detailed Description of Preferred Embodiments of Invention]

Hereinafter, the embodiments disclosed in the present specification will be described in detail with reference to the accompanying drawings, but the same or similar components are assigned to the same reference numbers regardless of reference numerals, and redundant description thereof will be omitted. The suffixes "module" and "part" for the components used in the following description are given or mixed in consideration of only the ease of writing the specification, and do not have distinct meanings or roles by themselves. Further, with regard to the embodiments disclosed in the present specification, if it is determined that detailed descriptions of related known technologies may obscure the gist of the embodiments disclosed in this specification, the detailed description thereof will be omitted. In addition, the accompanying drawings are only for easy understanding of the embodiments disclosed in the present specification.

When an element is referred to as being "coupled" or "connected" to another element, it is understood that it may be directly coupled or connected to the other element, or an alternative element may exist therebetween. On the other hand, when it is said that a certain element is "directly coupled" or "directly connected" to another element, it should be understood that an alternative element does not exist therebetween.

The singular expression may include the plural expression unless the context clearly dictates otherwise.

In this specification, terms such as "include" or "have" are intended to designate that the features, numbers, steps, operations, components, parts, or combinations thereof described in the specification exist, but it should be understood that this does not preclude the existence or addition of one or more other features, numbers, steps, operations, components, parts, or combinations thereof.

Carbon Valuation System

The carbon valuation system according to an embodiment of the present invention may include an information processing device that evaluates an amount of GHG reduction expected to occur in a technology project in currency value, on the basis of: an estimated GHG reduction amount, which is an amount of GHG reduction presumed to be induced by the technology project that is a target to be assessed; a calculation period of the GHG reduction during which the GHG reduction occurs due to the technology project; a discount rate that quantifies possible risks occurring in the technology project; and an emission permit price.

First, among the terms used in this specification, the carbon value refers to a value obtained by converting the GHG reduction amount presumed to be induced by the technology project into a currency value, wherein the technology project indicates a business in which a subject of this business executes a GHG reduction project, or in which the subject develops, produces, sells or services GHG reduction products.

The information processing device is a device that executes various calculations or processing of different types of information for carbon valuation according to an embodiment of the present invention, and types of the above device are not particularly limited. For example, the above device may be implemented in the form of not only fixed terminals such as a digital TV or a desktop computer, but also portable terminals such as mobile phones, smart phones, laptop computers, digital broadcasting terminals, PDA (personal digital assistants), PMP (portable multimedia player), navigation, slate PC, tablet PC, ultrabook, etc.

That is, the information processing device may evaluate an amount of GHG reduction expected to occur through the technology project in a currency value, using an estimated reduction amount, an economic lifespan, a discount rate and an emission permit price, so as to calculate the expected GHG reduction amount presumed to be induced in the technology project as a value amount, thereby being utilized in various fields such as finance.

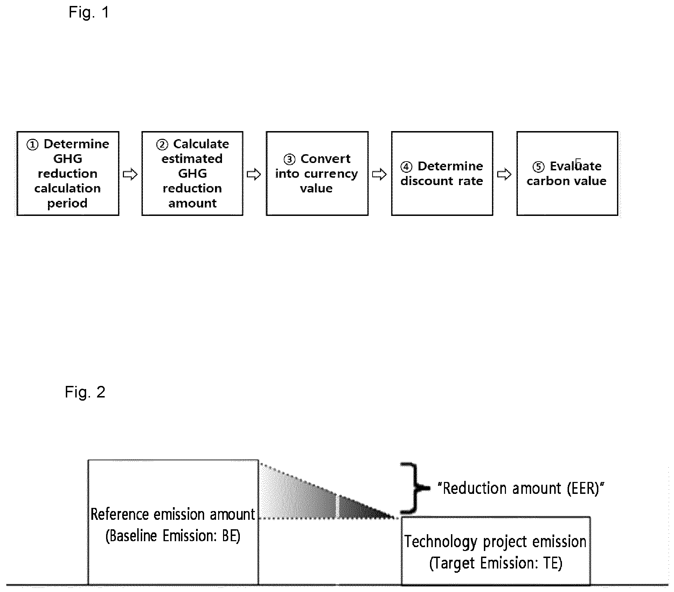

The GHG reduction calculation period refers to a period during which GHG reduction occurs due to the technology project as a target to be assessed, while the estimated GHG reduction amount refers to an amount of future GHG reduction presumed to be induced by the technology project, which is estimated and calculated in a scenario mode. As shown in FIG. 1, first, the information processing device may determine the GHG reduction calculation period and calculate the estimated GHG reduction amount. Then, the information processing device may multiply the estimated GHG reduction amount by an emission permit price to convert it into a currency value, apply a discount rate thereto in order to make the converted currency value into the present value, followed by adding up the present value to which the discount rate is applied, thereby evaluating a carbon value thereof.

Specifically, when the information processing device evaluates a value of the GHG reduction amount, it may be based on Equation 1 below.

[Equation 1]

$$\text{Carbon value} = \sum_{t=1}^{n} \frac{\text{estimated GHG reduction amount}_t \times \text{emission permit price}}{(1+r)^t}$$

Wherein n is a GHG reduction calculation period, the estimated GHG reduction amount$_t$ refers to an estimated amount of GHG reduction in t-th year, and r denotes a discount rate.

Factors to be considered in evaluating the carbon value by the information processing device may be divided into a case where the subject of the technology project executes a GHG reduction project and another case where the subject of the technology project produces and sells products (including services) that induce GHG reduction, and can be calculated differently.

In this regard, the concept of carbon value in a project refers to a reduction activity occurring direct GHG reduction, and may include, for example, a renewable energy power generation project. Further, the concept of carbon value in products (including services) refers to products that are used as a component of GHG activities (projects) and thus indirectly induce GHG reduction, and may include, for example, products for GHG reduction activities (projects) such as a solar cell, module, turbine, etc.

In other words, this means decomposing a project carbon value into carbon values of constitutional products for the project according to contribution of the reduction activities. In this regard, the GHG reduction contribution extent may be a ratio of unit prices or added values between products contributing to the GHG reduction. For example, assuming that the carbon value of the project is 100, product "g", product "h" and product "I" may have carbon values of 50, 30 and 20, respectively.

1) If the subject of the technology project performs GHG reduction project

When evaluating the carbon value by the information processing device, one of the considered factors is the GHG reduction calculation period, which may be a period of annual units in comprehensive consideration of the legal, institutional, physical (or mechanical), technical, economic and social requirements necessary for normal implementation of the project.

Further, when evaluating the carbon value by the information processing device, the estimated GHG reduction amount as one of the considered factors, as shown in FIG. 2, may be represented by a difference between a baseline emission amount (Baseline Emission: BE), which was calculated by assuming an alternative situation most likely to occur when the technology project to be assessed was not commercialized, and a target emission amount (Target Emission: TE), which was calculated by assuming a case where the technology project to be assessed has been commercialized.

GHG emission amounts at the baseline emission (BE) and the target emission (TE), respectively, may be calculated according to the following Equation 2,

[Equation 2]

GHG emission amount = amount of activity × emission factor × Global Warming Potential (GWP)

Wherein the amount of activity indicates a size of human activities (fuel consumption, product usage, product sales, operation amount, productivity, waste incineration etc.) that lead to GHG emission, while the emission factor is a coefficient that quantifies the GHG emission amount ($CO_2$ emission/unit fuel consumption, calorific value, oxidation rate, enteric fermentation emission factor, biomass emission factor, methane correction factor, etc.). Further, GWP may represent an extent of contribution of each greenhouse gas to global warming in a numerical value in terms of carbon dioxide (see Table 1 below).

[TABLE 1]

| green gas | carbon dioxide ($CO_2$) | methane ($CH_4$) | nitrous oxide ($N_2O$) | perfluorocarbon (PFCs) | hydrofluorocarbon (HFCs) | sulfur hexafluoride ($SF_6$) |
|---|---|---|---|---|---|---|
| Global Warming Indices | 1 | 21 | 310 | 6,500~9,200 | 140~11,700 | 23,900 |

As described above, the estimated GHG reduction amount (EER) may be calculated using the target emission (TE) and the baseline emission (BE) calculated above. In this case, EER refers to an estimated GHG reduction amount presumed to occur in a process of commercialization of the technology project to be assessed, and may be calculated by subtracting TE from BE as shown in the following Equation 3.

[Equation 3]

Estimated GHG reduction amount $(EER)_t$ = Baseline Emission $(BE)_t$ – Target Emission $(TE)_t$

Again, the emission permit price, as one of the factors considered when evaluating the carbon value by the information processing device, is used to convert the EER into a currency value, therefore, the carbon value may be calculated through conversion by multiplying the EER calculated as above for each year by the emission permit price (see the following Equation 4).

[Equation 4]

Currency value converted amount in t-th year = $(EER)_t$ × (emission permit price)

Wherein the emission permit price is a means for converting the EER ($tCO_2$-eq) into an amount (price), wherein it may be transaction price information provided by the emission permit trading exchange (KRX), a market in which emission permits are traded between independent parties. This is because the emission permit obtained by a company through GHG reduction is tradable in the market and best reflects the economic value of the GHG reduction amount.

That is, the information processing device may set the emission permit price based on the value received from an emission permit trading exchange server operated by the emission permit trading exchange.

The emission permit price is a transaction price provided by the emission permit trading exchange and, when evaluating a value of the estimated GHG reduction amount, it may be a price based on the corresponding evaluation reference date. However, the emission permit price is variable and, when considering the variability, an emission permit price to be considered when evaluating a carbon value may be an average price for a predetermined period, preferably the average of emission permit prices for the last 1 year. Alternatively, it may be a price estimated according to a trend due to price fluctuations, on the basis of prices over a predetermined period of time.

On the other hand, the discount rate, which is one of the factors considered when the carbon value is evaluated by the information processing device, is used for changing the converted currency value for the estimated GHG reduction amount into the present value. However, there is a close relationship between a technology project risk and a reduction occurring risk, therefore, if the technology project is not normally operated, there is high possibility that GHG reduction does not occur or GHG reduction amount may be reduced. Therefore, it is desirable to apply different risks inherent in a technology commercialization process to the discount rate when changing the estimated GHG reduction amount into the current price.

In other words, with regard to the carbon valuation according to an embodiment of the present invention, it is preferable to reflect a commercialization risk according to a commercialization subject, which is the same as in technology value assessment. Therefore, in the same manner as a discount rate calculation method used in the technology value assessment, the discount rate may be calculated using a capital asset pricing model (CAPM). However, it is preferable to additionally reflect factors affecting success/failure of commercialization of GHG reduction technologies (climate environment contribution, environmental and social impact, policy conformity, climate industry ripple effect, etc.) in the commercialization risk.

As a result, the information processing device may apply a discount rate to an annual currency value conversion amount obtained by multiplying the estimated GHG reduction amount by the emission permit price, thereby calculating a sum of the present value for each year (see Equation 1 above).

2) In a case where the subject of the technology project produces or sells products inducing GHG reduction

When the information processing device calculates a value of the GHG reduction amount presumed to be induced by a corresponding technology project, if the subject of the technology project produces and sells products (including services) that induce GHG reduction, this is substantially the same as the case where the subject of the technology project performs GHG reduction project. However, among factors considered when the information processing device evaluates a carbon value, the GHG reduction calculation period, calculation of the estimated GHG reduction amount, application of the discount rate, etc. may vary according to product assessment characteristics.

Hereinafter, differences from the case where the subject of the aforementioned technology project implements GHG reduction project will be mainly explained.

With regard to the GHG reduction calculation period, which is one of the factors considered when the information processing device evaluates a carbon value, an economic lifespan of the key technology constituting a product as a target to be assessed may become the GHG reduction calculation period.

The economic lifespan refers to a period during which a technology project maintains a competitive advantage in the market, and may be not only a simple technology lifespan but also a period defined by considering environmental factors under which the corresponding technology is used.

Further, with regard to the estimated GHG reduction amount, which is one of factors considered when the information processing device evaluates a carbon value, a value summed with a reduction amount contributed by an evaluation target product among the estimated annual GHG reduction amount of a project, to which the evaluation target product is expected to be applied, may be used as the estimated GHG reduction amount induced by the product.

Further, the carbon value of a technology to which a technical contribution extent is applied may be evaluated by considering the contribution of a key technology constituting an evaluation target product. The technical contribution extent refers to a level for contribution of the key technology constituting the evaluation target product to GHG reduction, and may be calculated by multiplying the estimated GHG reduction amount induced due to the product by the technical contribution extent.

Specifically, the information processing device may evaluate a value of the GHG reduction amount based on the technical contribution extent according to the following Equation 5.

[Equation 5]

$$\text{Carbon value} = \sum_{i=1}^{n} \frac{\text{estimated GHG reduction amount}_t \times \text{emission permit price}}{(1+r)^t} \times \text{technical contribution extent}$$

Wherein n is an economic lifespan of the key technology, the estimated GHG reduction amount$_t$ is an estimated GHG reduction amount in t-th year, and r may be the discount rate.

Carbon Valuation Method

The carbon valuation method according to an embodiment of the present invention may include evaluating an amount of GHG reduction expected to occur through a technology project in a currency value by an information processing device, on the basis of: an estimated GHG reduction amount indicating an amount of GHG reduction presumed to be induced by the technology project that is a target to be assessed; a GHG reduction calculation period during which the GHG reduction occurs due to the technology project; a discount rate that quantifies possible risks occurring in the technology project; and an emission permit price.

Accordingly, the estimated GHG reduction amount presumed to be induced due to the technology project may be assessed and evaluated as a value amount, thereby being utilized for finance or the like.

Since the description of the above step overlaps with those described above, a detailed description thereof will be omitted while applying the afore-mentioned description.

Computer-Readable Recording Medium

The carbon valuation method according to an embodiment of the present invention described above may be implemented in the form of program instructions that can be executed through various computer components and recorded in a computer-readable recording medium. The computer-readable recording medium may be provided with program instructions, data files, data structures, etc. alone or in combination. The program instructions recorded on the computer-readable recording medium may be specially designed and configured for the present invention, or may be known and available to those skilled in the computer software field. Examples of the computer-readable recording medium may include magnetic media such as hard disks, floppy disks, and magnetic tapes, etc, optical recording media such as CD-ROMs and DVDs, magnetooptical media such as floptical disk, and hardware devices specially configured to store and execute program instructions, such as ROM, RAM, flash memory, and the like. Examples of the program instructions may include not only machine language codes such as those generated by a compiler, but also high-level language codes that can be executed by a computer using an interpreter or the like. The hardware device may be configured to operate as one or more software modules for executing the processing according to the present invention, and vice versa.

As above, preferred embodiments of the present invention have been described in detail with reference to the drawings.

Accordingly, the scope of the present invention is indicated by the claims described below rather than the above detailed description.

**Claims**

1. A carbon value assessment, carbon valuation, system, comprising an information processing device that evaluates an amount of greenhouse gas, GHG, reduction expected to occur through a technology project in a currency value, on the basis of: estimated reduction of greenhouse gas, estimated GHG reduction amount, which is an amount of GHG reduction presumed to be induced by the technology project that is a target to be assessed; a calculation period of the GHG reduction during which the GHG reduction occurs due to the technology project; a discount rate that quantifies possible risks occurring in the technology project; and an emission permit price,

   wherein the risks include a commercialization risk and a GHG reduction occurring risk,
   wherein the information processing device is configured to calculate the estimated GHG reduction amount differently depending on whether a first scenario that a subject of the technological project is executing a GHG reduction project or a second scenario that the subject of the technological project is producing and selling a GHG reduction product,
   wherein the information processing device is configured to calculate, in the first scenario, the estimated GHG reduction amount, on the basis of a difference between a baseline emission amount indicating a GHG emission amount according to an alternative scenario, which is most likely to occur if the technology project was not commercialized, and a target emission amount indicating a GHG emission amount caused due to a commercialization of the technology project,
   wherein the information processing device is configured to calculate, in the second scenario, the estimated GHG reduction amount while reflecting a contribution extent of the GHG reduction product among an estimated annual GHG reduction amount in the project, to which the GHG reduction product is expected to be applied, and
   wherein the information processing device is configured to estimate each of the baseline emission amount and the target emission amount, respectively, based on an activity amount to quantify a size of human activity causing GHG emission, an emission factor to quantify a GHG emission amount for unit activity, and a global warming potential, which is a numerical expression of information on contribution of each greenhouse gas to global warming in terms of carbon dioxide.

2. The system according to claim 1, wherein the technology project refers to a business in which a subject of this business executes a GHG reduction project, otherwise, develops, produces, sells or services GHG reduction products,

   wherein the GHG reduction project includes an activity for the subject of the technology project to directly generate GHG reduction effects,
   while the GHG reduction products include a product or service to be provided for execution of the GHG reduction project so as to indirectly contribute to the GHG reduction.

3. The system according to claim 1, wherein the information processing device evaluates a value of the GHG reduction according to the following equation,

[Equation]

$$\text{Carbon value} = \sum_{t=1}^{n} \frac{\text{estimated GHG reduction amount}_t \times \text{emission permit price}}{(1+r)^t}$$

wherein n is a GHG reduction calculation period, the estimated GHG reduction amount$_t$ is an estimated amount of GHG reduction in t-th year, and r denotes the discount rate.

**4.** The system according to claim 3, wherein the information processing device evaluates the value of the GHG reduction amount according to the following equation, additionally based on a technical contribution extent indicating the contribution of a key technology constituting the technology project to the GHG reduction,

[Equation]

$$\text{Carbon value} = \sum_{i=1}^{n} \frac{\text{estimated GHG reduction amount}_t \times \text{emission permit price}}{(1+r)^t} \times \text{technical contribution extent}$$

wherein n is an economic lifespan of the technology constituting the technology project, while r denotes the discount rate.

**5.** The system according to claim 1, wherein the activity amount is calculated from product sales (or sales amount), a production volume, a waste incineration amount or a product use amount by the subject of the technology project, wherein a change over time is reflected.

**6.** The system according to claim 1, wherein the emission permit price is a value received from an external emission permit trading server, which is a price estimated on the basis of an evaluation reference date, an average price for a predetermined period, or a price for the predetermined period.

**7.** The system according to claim 6, wherein the emission permit price is an average value of emission permit prices actually traded for 1 year from a start date to an end date of the previous year prior to a year, in which the evaluation reference date belongs, with weighting a trading volume.

**8.** A carbon valuation method, comprising:
evaluating an amount of greenhouse gas, GHG, reduction expected to occur through a technology project in a currency value by means of an information processing device, on the basis of: estimated reduction of greenhouse gas, estimated GHG reduction amount, which is an amount of GHG reduction presumed to be induced by the technology project that is a target to be assessed; a calculation period of the GHG reduction during which the GHG reduction occurs due to the technology project; a discount rate that quantifies possible risks occurring in the technology project; and an emission permit price,

wherein the risks include a commercialization risk and a GHG reduction occurring risk,
wherein the information processing device calculates the estimated GHG reduction amount differently depending on whether a first scenario that a subject of the technological project is executing a GHG reduction project or a second scenario that the subject of the technological project is producing and selling a GHG reduction product,
wherein the information processing device calculates, in the first scenario, the estimated GHG reduction amount, on the basis of a difference between a baseline emission amount indicating a GHG emission amount according to an alternative scenario, which is most likely to occur if the technology project was not commercialized, and a target emission amount indicating a GHG emission amount caused due to a commercialization of the technology project,
wherein the information processing device calculates, in the second scenario, the estimated GHG reduction amount while reflecting a contribution extent of the GHG reduction product among an estimated annual GHG reduction amount in the project, to which the GHG reduction product is expected to be applied, and
wherein the information processing device estimates each of the baseline emission amount and the target emission amount, respectively, based on an activity amount to quantify a size of human activity causing GHG emission, an emission factor to quantify a GHG emission amount for unit activity, and a global warming potential, which is a numerical expression of information on contribution of each greenhouse gas to global warming in terms of carbon dioxide.

**Patentansprüche**

1. Kohlenstoffwert-Beurteilung, Kohlenstoff-Wertermittlung, System, umfassend eine Informationsverarbeitungsvorrichtung, die eine Menge an Treibhausgas-, THG-, -Reduktion, deren Auftreten durch ein Technologieprojekt in einem Währungswert erwartet wird, auf der Grundlage von Folgendem beurteilt: geschätzte Reduktion von Treibhausgas, geschätzte THG-Reduktionsmenge, welche eine Menge an THG-Reduktion ist, von der angenommen wird, dass sie durch das Technologieprojekt induziert wird, welches ein zu beurteilendes Ziel ist; einen Berechnungszeitraum der THG-Reduktion, während dessen die THG-Reduktion aufgrund des Technologieprojekts auftritt; einen Abzinsungssatz, der mögliche Risiken, die in dem Technologieprojekt auftreten, quantifiziert; und einen Preis für Emissionsberechtigungen,

   wobei die Risiken ein Kommerzialisierungsrisiko und ein THG-Reduktions-Eintrittsrisiko umfassen,
   wobei die Informationsverarbeitungsvorrichtung dazu eingerichtet ist, die geschätzte THG-Reduktionsmenge unterschiedlich zu berechnen, je nachdem, ob ein erstes Szenarium, dass ein Subjekt des Technologieprojekts ein THG-Reduktionsprojekt ausführt, oder ein zweites Szenarium, dass das Subjekt des Technologieprojekts ein THG-Reduktionsprodukt produziert und verkauft, vorliegt,
   wobei die Informationsverarbeitungsvorrichtung dazu eingerichtet ist, in dem ersten Szenarium die geschätzte THG-Reduktionsmenge auf der Grundlage einer Differenz zwischen einer Basislinien-Emissionsmenge, die eine THG-Emissionsmenge gemäß einem alternativen Szenarium angibt, welches am wahrscheinlichsten auftreten würde, wenn das Technologieprojekt nicht kommerzialisiert würde, und einer Ziel-Emissionsmenge zu berechnen, die eine THG-Emissionsmenge angibt, welche aufgrund einer Kommerzialisierung des Technologieprojekts verursacht wird,
   wobei die Informationsverarbeitungsvorrichtung dazu eingerichtet ist, in dem zweiten Szenarium die geschätzte THG-Reduktionsmenge zu berechnen, während ein Beitragsumfang des THG-Reduktionsprodukts an einer geschätzten jährlichen THG-Reduktionsmenge in dem Projekt, bei dem die Anwendung des THG-Reduktionsprodukts erwartet wird, berücksichtigt wird, und
   wobei die Informationsverarbeitungsvorrichtung dazu eingerichtet ist, jeweils die Basislinien-Emissionsmenge und die Ziel-Emissionsmenge bezogen auf eine Aktivitätsmenge zum Quantifizieren einer Größe der menschlichen Tätigkeit, die eine THG-Emission verursacht, einen Emissionsfaktor zum Quantifizieren einer THG-Emissionsmenge für eine Einheitsaktivität und ein Treibhauspotenzial zu schätzen, welches ein numerischer Ausdruck von Informationen über den Beitrag jedes Treibhausgases zur Erderwärmung bezogen auf Kohlendioxid ist.

2. System nach Anspruch 1, wobei das Technologieprojekt sich auf ein Geschäft bezieht, in dem ein Subjekt dieses Geschäfts ein THG-Reduktionsprojekt ausführt, andernfalls THG-Reduktionsprodukte entwickelt, produziert, verkauft oder wartet,

   wobei das THG-Reduktionsprojekt eine Tätigkeit umfasst, damit das Subjekt des Technologieprojekts direkt THG-Reduktionseffekte erzeugt,
   während die THG-Reduktionsprodukte ein Produkt oder eine Dienstleistung umfassen, die für eine Ausführung des THG-Reduktionsprojekts bereitzustellen sind, um so indirekt zur THG-Reduktion beizutragen.

3. System nach Anspruch 1, wobei die Informationsverarbeitungsvorrichtung einen Wert der THG-Reduktion gemäß der folgenden Gleichung beurteilt,

   [Gleichung]

   $$\text{Kohlenstoffwert} = \sum_{t=1}^{n} \frac{\text{geschätzte THG−Reduktionsmenge}_t \times \text{Preis für Emissionsberechtigungen}}{(1+r)^t}$$

   wobei n ein THG-Reduktionsberechnungszeitraum ist, die geschätzte THG-Reduktionsmenge, eine geschätzte Menge an THG-Reduktion im t-ten Jahr ist und r den Abzinsungssatz bezeichnet.

4. System nach Anspruch 3, wobei die Informationsverarbeitungsvorrichtung den Wert der THG-Reduktionsmenge gemäß der folgenden Gleichung beurteilt, zusätzlich bezogen auf einen technischen Beitragsumfang, der den Beitrag einer das Technologieprojekt bildenden Schlüsseltechnologie zur THG-Reduktion angibt,

[Gleichung]

$$\text{Kohlenstoffwert} = \sum_{i=1}^{n} \frac{\text{geschätzte THG}-\text{Reduktionsmenget} \times \text{Preis für Emissionsberechtigungen}}{(1+r)^t} \times$$

technischer Beitragsumfang

wobei n eine wirtschaftliche Lebensdauer der Technologie ist, die das Technologieprojekt bildet, während r den Abzinsungssatz bezeichnet.

5. System nach Anspruch 1, wobei die Aktivitätsmenge aus Produktverkäufen (oder einem Verkaufsbetrag), einem Produktionsvolumen, einer Abfallverbrennungsmenge oder einer Produktnutzungsmenge durch das Subjekt des Technologieprojekts berechnet wird, wobei eine zeitliche Änderung berücksichtigt wird.

6. System nach Anspruch 1, wobei der Preis für Emissionsberechtigungen ein Wert ist, der von einem externen Server für den Handel mit Emissionsberechtigungen empfangen wird, welcher ein auf der Grundlage eines Bewertungsstichtags geschätzter Preis, ein Durchschnittspreis für einen vorbestimmten Zeitraum oder ein Preis für den vorbestimmten Zeitraum ist.

7. System nach Anspruch 6, wobei der Preis für Emissionsberechtigungen ein Durchschnittswert von Preisen für Emissionsberechtigungen ist, die während eines Zeitraums von 1 Jahr von einem Startdatum bis zu einem Enddatum des Vorjahres vor einem Jahr, in das der Bewertungsstichtag fällt, unter Gewichtung eines Handelsvolumens tatsächlich gehandelt wurden.

8. Verfahren zur Kohlenstoff-Wertermittlung, umfassend:

Beurteilen einer Menge an Treibhausgas-, THG-, -Reduktion, deren Auftreten durch ein Technologieprojekt in einem Währungswert erwartet wird, mittels einer Informationsverarbeitungsvorrichtung auf der Grundlage von Folgendem: geschätzte Reduktion von Treibhausgas, geschätzte THG-Reduktionsmenge, welche eine Menge an THG-Reduktion ist, von der angenommen wird, dass sie durch das Technologieprojekt induziert wird, welches ein zu beurteilendes Ziel ist; einen Berechnungszeitraum der THG-Reduktion, während dessen die THG-Reduktion aufgrund des Technologieprojekts auftritt; einen Abzinsungssatz, der mögliche Risiken, die in dem Technologieprojekt auftreten, quantifiziert; und einen Preis für Emissionsberechtigungen,
wobei die Risiken ein Kommerzialisierungsrisiko und ein THG-Reduktions-Eintrittsrisiko umfassen,
wobei die Informationsverarbeitungsvorrichtung die geschätzte THG-Reduktionsmenge unterschiedlich berechnet, je nachdem, ob ein erstes Szenarium, dass ein Subjekt des Technologieprojekts ein THG-Reduktionsprojekt ausführt, oder ein zweites Szenarium, dass das Subjekt des Technologieprojekts ein THG-Reduktionsprodukt produziert und verkauft, vorliegt,
wobei die Informationsverarbeitungsvorrichtung in dem ersten Szenarium die geschätzte THG-Reduktionsmenge auf der Grundlage einer Differenz zwischen einer Basislinien-Emissionsmenge, die eine THG-Emissionsmenge gemäß einem alternativen Szenarium angibt, welches am wahrscheinlichsten auftreten würde, wenn das Technologieprojekt nicht kommerzialisiert würde, und einer Ziel-Emissionsmenge berechnet, die eine THG-Emissionsmenge angibt, welche aufgrund einer Kommerzialisierung des Technologieprojekts verursacht wird,
wobei die Informationsverarbeitungsvorrichtung in dem zweiten Szenarium die geschätzte THG-Reduktionsmenge berechnet, während ein Beitragsumfang des THG-Reduktionsprodukts an einer geschätzten jährlichen THG-Reduktionsmenge in dem Projekt, bei dem die Anwendung des THG-Reduktionsprodukts erwartet wird, berücksichtigt wird, und
wobei die Informationsverarbeitungsvorrichtung jeweils die Basislinien-Emissionsmenge und die Ziel-Emissionsmenge bezogen auf eine Aktivitätsmenge zum Quantifizieren einer Größe der menschlichen Tätigkeit, die eine THG-Emission verursacht, auf einen Emissionsfaktor zum Quantifizieren einer THG-Emissionsmenge für eine Einheitsaktivität und auf ein Treibhauspotenzial schätzt, welches ein numerischer Ausdruck von Informationen über den Beitrag jedes Treibhausgases zur Erderwärmung bezogen auf Kohlendioxid ist.

**Revendications**

1. Système d'évaluation de valeur carbone, comprenant un dispositif de traitement d'informations qui évalue, en valeur monétaire, une quantité de réduction de gaz à effet de serre , GHG, attendue par un projet technologique, sur la base de : une réduction estimée de gaz à effet de serre, quantité estimée de réduction de GHG, correspondant à une quantité de réduction de GHG supposée être induite par le projet technologique faisant l'objet de l'évaluation ; une période de calcul de la réduction de GHG pendant laquelle la réduction de GHG se produit du fait du projet technologique ; un taux d'actualisation qui quantifie des risques possibles survenant dans le projet technologique ; et un prix de permis d'émission,

   dans lequel les risques comprennent un risque de commercialisation et un risque d'occurrence de réduction de GHG,
   dans lequel le dispositif de traitement d'informations est configuré pour calculer la quantité estimée de réduction de GHG différemment selon qu'il s'agit d'un premier scénario dans lequel un sujet du projet technologique exécute un projet de réduction de GHG ou d'un second scénario dans lequel le sujet du projet technologique produit et vend un produit de réduction de GHG,
   dans lequel le dispositif de traitement d'informations est configuré pour calculer, dans le premier scénario, la quantité estimée de réduction de GHG sur la base d'une différence entre une quantité d'émission de référence indiquant une quantité d'émission de GHG selon un scénario alternatif le plus susceptible de se produire si le projet technologique n'était pas commercialisé, et une quantité d'émission cible indiquant une quantité d'émission de GHG générée du fait de la commercialisation du projet technologique,
   dans lequel le dispositif de traitement d'informations est configuré pour calculer, dans le second scénario, la quantité estimée de réduction de GHG en reflétant un degré de contribution du produit de réduction de GHG parmi une quantité annuelle estimée de réduction de GHG dans le projet auquel le produit de réduction de GHG est destiné à être appliqué, et
   dans lequel le dispositif de traitement d'informations est configuré pour estimer respectivement la quantité d'émission de référence et la quantité d'émission cible sur la base d'une quantité d'activité servant à quantifier une ampleur d'activité humaine générant des émissions de GHG, d'un facteur d'émission servant à quantifier une quantité d'émission de GHG par unité d'activité, et d'un potentiel de réchauffement global, qui est une expression numérique d'une contribution de chaque gaz à effet de serre au réchauffement climatique en équivalent dioxyde de carbone.

2. Système selon la revendication 1, dans lequel le projet technologique désigne une activité dans laquelle un sujet exécute un projet de réduction de GHG ou, alternativement, développe, produit, vend ou fournit des produits de réduction de GHG,

   dans lequel le projet de réduction de GHG comprend une activité par laquelle le sujet du projet technologique génère directement des effets de réduction de GHG,
   tandis que les produits de réduction de GHG comprennent un produit ou un service fourni pour l'exécution du projet de réduction de GHG de manière à contribuer indirectement à la réduction de GHG.

3. Système selon la revendication 1, dans lequel le dispositif de traitement d'informations évalue une valeur de la réduction de GHG selon l'équation suivante,

   [Équation]

   $$\text{Valeur de carbone} = \sum_{t=1}^{n} \frac{\text{montant}_t \text{ estimé de réduction de GHG} \times \text{prix de permit d'émission}}{(1+r)^t}$$

   dans lequel n est une période de calcul de réduction de GHG, la quantité estimée de réduction de GHG t correspond à une quantité estimée de réduction de GHG à l'année t, et r désigne le taux d'actualisation.

4. Système selon la revendication 3, dans lequel le dispositif de traitement d'informations évalue la valeur de la quantité de réduction de GHG selon l'équation suivante, en se fondant en outre sur un degré de contribution technique indiquant la contribution d'une technologie clé constituant le projet technologique à la réduction de GHG,

[Équation]

$$\text{Valeur de carbone} = \sum_{i=1}^{n} \frac{\text{montant}_t \text{ estimé de réduction de GHG} \times \text{prix de permit d'émission}}{(1+r)^t} \times \text{ampleur de contribution technique}$$

dans lequel n est une durée de vie économique de la technologie constituant le projet technologique, et r désigne le taux d'actualisation.

**5.** Système selon la revendication 1, dans lequel la quantité d'activité est calculée à partir de ventes de produits (ou montant de ventes), d'un volume de production, d'une quantité d'incinération de déchets ou d'une quantité d'utilisation de produit par le sujet du projet technologique, une évolution temporelle étant prise en compte.

**6.** Système selon la revendication 1, dans lequel le prix de permis d'émission est une valeur reçue d'un serveur externe d'échange de permis d'émission, correspondant à un prix estimé sur la base d'une date de référence d'évaluation, d'un prix moyen sur une période prédéterminée ou d'un prix pour la période prédéterminée.

**7.** Système selon la revendication 6, dans lequel le prix de permis d'émission est une valeur moyenne de prix de permis d'émission effectivement négociés pendant un an entre une date de début et une date de fin de l'année précédente à l'année à laquelle appartient la date de référence d'évaluation, avec pondération par un volume de transactions.

**8.** Procédé d'évaluation de valeur carbone, consistant à :

évaluer, au moyen d'un dispositif de traitement d'informations, une quantité de réduction de gaz à effet de serre, GHG, attendue par un projet technologique en valeur monétaire, sur la base de : une réduction estimée de gaz à effet de serre, quantité estimée de réduction de GHG, correspondant à une quantité de réduction de GHG supposée être induite par le projet technologique faisant l'objet de l'évaluation ; une période de calcul de la réduction de GHG pendant laquelle la réduction de GHG se produit du fait du projet technologique ; un taux d'actualisation qui quantifie des risques possibles survenant dans le projet technologique ; et un prix de permis d'émission,
dans lequel les risques comprennent un risque de commercialisation et un risque d'occurrence de réduction de GHG,
dans lequel le dispositif de traitement d'informations calcule la quantité estimée de réduction de GHG différemment selon qu'il s'agit d'un premier scénario dans lequel un sujet du projet technologique exécute un projet de réduction de GHG ou d'un second scénario dans lequel le sujet du projet technologique produit et vend un produit de réduction de GHG,
dans lequel le dispositif de traitement d'informations calcule, dans le premier scénario, la quantité estimée de réduction de GHG sur la base d'une différence entre une quantité d'émission de référence indiquant une quantité d'émission de GHG selon un scénario alternatif le plus susceptible de se produire si le projet technologique n'était pas commercialisé, et une quantité d'émission cible indiquant une quantité d'émission de GHG générée du fait de la commercialisation du projet technologique,
dans lequel le dispositif de traitement d'informations calcule, dans le second scénario, la quantité estimée de réduction de GHG en reflétant un degré de contribution du produit de réduction de GHG parmi une quantité annuelle estimée de réduction de GHG dans le projet auquel le produit de réduction de GHG est destiné à être appliqué, et
dans lequel le dispositif de traitement d'informations estime respectivement une quantité d'émission de référence et une quantité d'émission cible, sur la base d'une quantité d'activité permettant de quantifier l'ampleur de l'activité humaine générant des émissions de gaz à effet de serre, GHG, d'un facteur d'émission permettant de quantifier une quantité d'émission de GHG par unité d'activité, et d'un potentiel de réchauffement global, qui est une expression numérique d'informations relatives à la contribution de chaque gaz à effet de serre au réchauffement climatique en termes de dioxyde de carbone.

Fig. 1

| ① Determine GHG reduction calculation period | ⇨ | ② Calculate estimated GHG reduction amount | ⇨ | ③ Convert into currency value | ⇨ | ④ Determine discount rate | ⇨ | ⑤ Evaluate carbon value |
|---|---|---|---|---|---|---|---|---|

Fig. 2

Reference emission amount (Baseline Emission: BE)

"Reduction amount (EER)"

Technology project emission (Target Emission: TE)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010092290 A
- KR 101457890 B1

- KR 20120095593 A